# EUROPEAN PATENT APPLICATION

(11) **EP 2 523 341 A2**
(43) Date of publication of application: **14.11.2012**
(21) Application number: 12167346.1
(22) Date of filing: 09.05.2012
(51) Int. Cl.: H02P 6/18

(54) **Rotor position detecting apparatus**

(30) Priority: 13.05.2011 JP 2011108282
(71) Applicant: AISIN SEIKI KABUSHIKI KAISHA, Kariya-shi, Aichi-ken 448-8650 (JP)
(72) Inventor: Tokunaga, Yoshinari, KARIYA-SHI, AICHI-KEN, 448-8650 (JP); Aizawa, Koichi, KARIYA-SHI, AICHI-KEN, 448-8650 (JP)
(74) Representative: Delumeau, François Guy

(57) **Abstract**

A rotor position detecting apparatus (100) includes a PWM control portion (1) controlling a switching element (Q1, Q2, Q3, Q4, Q5, Q6) included in an inverter (11) by a PWM signal having a predetermined frequency, a determination portion (2) determining a magnitude correlation at least two times between a reference voltage (Vref) specified beforehand and a terminal voltage of each terminal (41, 42, 43) included in a three-phase motor (10) in a state where the terminal voltage corresponds to one cycle of the PWM signal, and a detection portion (3) detecting a position of a rotor of the three-phase motor (10) based on a determination result of the determination portion (2).

## Description

### TECHNICAL HELD

This disclosure generally relates to a rotor position detecting apparatus.

### BACKGROUND DISCUSSION

A three-phase motor including a stator having stator coils, and a rotor having a permanent magnet has been used as a power source of electrical equipment. A rotation of the rotor is controlled by attraction and repulsion acting between a magnetic flux generated by means of an electric power supply to the stator coils and a magnetic flux of the permanent magnet. In order to control the rotation of the rotor, it is necessary to specify an accurate position of the rotor and to supply the electric power to the appropriate stator coils depending on the position of the rotor. It is considered to provide and use a rotation sensor so as to detect the accurate position of the rotor. However, the usage of the rotation sensor leads to a cost increase. Thus, a technique to detect the position of the rotor while achieving a reduced cost has been considered, for example, as disclosed in JP2006-34060A (which will be hereinafter referred to as Reference 1).

A control apparatus of a brushless motor (hereinafter simply referred to as a motor) disclosed in Reference 1 includes a position detecting means for detecting a position of a rotor by comparing an induced voltage generated at each of the stator coils of the motor and a predetermined reference voltage at a rising or a falling of the induced voltage, and a time calculating means for calculating a time period corresponding to a predetermined electrical angle based on a comparison result of the position detecting means. The control apparatus also includes a switching time setting means for setting a time at which the power supply to the stator coils is switched (i.e., the power supply is switched from one of the stator coils to the other of the stator coils) on a basis of the calculated time period by the time calculating means, and a switching means for switching the power supply to the stator coils after a time specified by the switching time setting means elapses from a time when the position detection of the rotor is performed.

According to the control apparatus disclosed in Reference 1, the position detection is performed one time per cycle of a PWM signal. At this time, in a case where the number of rotations of the motor increases, a time period in which the electric power is supplied to each of the stator coils decreases. Thus, when a frequency of the PWM signal is constant, an opportunity to detect the position of the rotor is reduced. In addition, immediately after the power supply is switched from one of the stator coils to the other of the stator coils, for example, a surge is likely to occur. Thus, the position of the rotor may not be detected until a predetermined time elapses after the power supply is switched from one of the stator coils to the other of the stator coils (i.e., a masking time is provided). As a result, the opportunity to detect the position of the rotor is further reduced. The technique disclosed in Reference 1 is not suitable for the case where the number of rotations of the motor is large. Cases to which the technique disposed in Reference 1 is applicable may be reduced.

A need thus exists for a rotor position detecting apparatus that appropriately detects a rotor position even in a case where the number of rotations of a motor is large.

### SUMMARY

According to an aspect of this disclosure, a rotor position detecting apparatus includes a PWM control portion controlling a switching element included in an inverter by a PWM signal having a predetermined frequency, a determination portion determining a magnitude correlation at least two times between a reference voltage specified beforehand and a terminal voltage of each terminal included in a three-phase motor in a state where the terminal voltage corresponds to one cycle of the PWM signal, and a detection portion detecting a position of a rotor of the three-phase motor based on a determination result of the determination portion.

Accordingly, even when the number of pulses of the PWM signal decreases because of an increase of revolutions of the three-phase motor, the position detection of the rotor is completed within one cycle of the PWM signal. Thus, regardless of the revolutions of the three-phase motor, the rotor position is appropriately detected. In addition, because the rotor position is detected on a basis of the result after the plural determinations, the wrong detection of the rotor because of a noise, for example, is restrained.

In one embodiment, the detection portion detects that the rotor reaches a specific position in a case where the determination result of the determination portion in which the terminal voltage smaller than the reference voltage exceeds the reference voltage is obtained at least two times in the one cycle of the PWM signal or in a case where the determination result of the determination portion in which the terminal voltages greater than the reference voltage falls below the reference voltage is obtained at least two times in the one cycle of the PWM signal.

Accordingly, changes of the terminal voltage relative to the reference voltage are appropriately determined. As a result, it is accurately detected that the rotor reaches the specific position.

In one embodiment, the position detecting apparatus further includes an edge detection portion detecting an edge of the PWM signal, wherein the determination portion determines the magnitude correlation at a timing based on the edge detected by the edge detection portion.

The terminal voltage of each of the terminals of the three-phase motor is amplified in synchronization with the PWM signal. Thus, according to the aforementioned configuration, the timing at which the magnitude correlation between the terminal voltage and the reference voltage is determined may be easily specified. Therefore, the determination portion appropriately determines the magnitude correlation.

In one embodiment, the determination portion performs a first determination after a predetermined time elapses from a detection of a rising edge of the PWM signal.

Accordingly, even when a high-level period of a waveform of the terminal voltage of each of the terminals of the three-phase motor is short, the determination portion determines the magnitude correlation based on a timing when the rising edge is detected, thereby easily performing the plural determinations.

In one embodiment, the determination portion changes a timing at which the determination portion determines the magnitude correlation depending on revolutions of the three-phase motor.

Accordingly, even when the noise is likely to occur because of the increase of the revolutions of the three-phase motor, the determination timing is specified at a timing where less noise occurs. The determination portion thus appropriately determines the magnitude correlation.

In one embodiment, the determination portion changes the number of times the determination portion determines the magnitude correlation depending on revolutions of the three-phase motor.

Accordingly, even when the noise is likely to occur because of the increase of the revolutions of the three-phase motor, the number of times the determination portion determines the magnitude correlation increases to thereby enhance a reliability of the determination.

In one embodiment, the determination portion changes a timing at which the determination portion determines the magnitude correlation depending on a duty ratio of the PWM signal.

Accordingly, even when an on-duty ratio is reduced, the determination timing is appropriately specified so that the determination portion accurately determines the magnitude correlation.

In one embodiment, the determination portion changes the number of times the determination portion determines the magnitude correlation depending on a duty ratio of the PWM signal.

Accordingly, even when the on-duty ratio is enlarged, the number of times the determination portion determines the magnitude correlation increases to thereby enhance a reliability of the determination. The determination portion accurately determines the magnitude correlation.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a block diagram schematically illustrating a configuration of a rotor position detecting apparatus according to an embodiment disclosed here;

Fig. 2 is a diagram illustrating examples of PWM signals for respective transistors;

Fig. 3 is a diagram illustrating voltage waveforms of a U-phase terminal, a V-phase terminal, and a W-phase terminal;

Fig. 4A is a diagram illustrating an output of a detection signal;

Fig. 4B is a diagram illustrating the output of the detection signal;

Fig. 5 is a diagram illustrating an example of a determination based on a falling edge;

Fig. 6 is a diagram illustrating an example of the determination where the number of determinations increases; and

Fig. 7 is a diagram illustrating an example of the determination based on revolutions of a three-phase motor.

### DETAILED DESCRIPTION

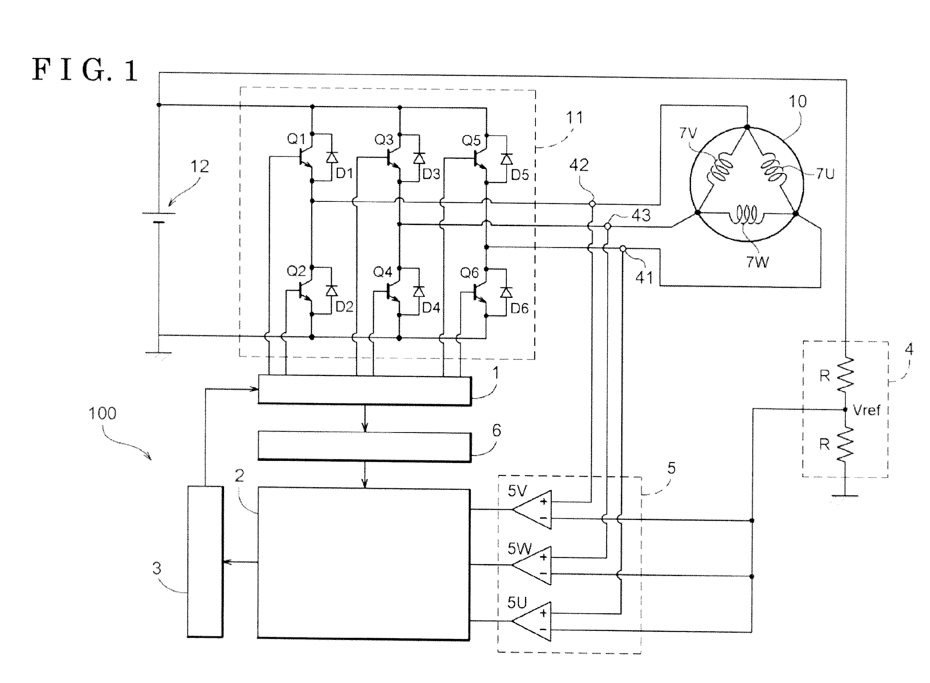

An embodiment will be explained with reference to the attached drawings. A rotor position detecting apparatus 100 of the present embodiment includes a function to appropriately detect a position of a rotor of a sensoriess motor. According to the present embodiment, a three-phase motor serves as the sensorless motor where a permanent magnet is provided at a rotor while stator coils are provided at a stator, for example. As illustrated in Fig. 1, the rotor position detecting apparatus 100 includes a PWM control portion 1, a determination portion 2, a detection portion 3, a reference voltage generation portion. 4, a comparison portion. 5, and an edge detection portion 6.

A three-phase motor 10 includes the rotor having the permanent magnet and the stator generating a magnetic flux so as to apply a rotational force to the rotor. The stator includes stator coils 7U, 7V, and 7W for a U-phase, a V-phase, and a W-phase, respectively. The stator coils 7U, 7V, and 7W, which are connected to one another in a delta connection, are connected to an inverter 11.

The inverter 11, to which the three-phase motor 10 is a control target, converts a direct current voltage (DC voltages) into an alternating current voltage (AC voltage), That is, the inverter 11 functions as a frequency conversion portion. The DC voltage is supplied to the inverter 11 from a power source 12 connected to the inverter 11. The inverter 11 includes six transistors Q1 , Q2, Q3, Q4, Q5, and Q6 (which will be hereinafter referred to as transistors Q1 to Q6 when collectively described), specifically, the transistors Q1, Q3, and Q5 at a high-level side connected to a positive terminal of the power source 12 and the transistors Q2, Q4, and Q6 at a low-level side connected to a negative terminal of the power source 12.

In a case where only the transistors Q1 and Q4 are turned on, for example, an electric power is supplied between two terminals among three terminals of the three-phase motor 10. The three terminals are a U-phase terminal 41, a V-phase terminal 42, and a W-phase terminal 43. The two terminals related to the turning-on of the transistors Q1 and Q4 are the V-phase terminal 42 and the W-phase terminal 43. Therefore, when the transistors Q1 and Q4 are turned on at the same time, the electric power is supplied between the V-phase terminal 42 and the W-phase terminal 43. Because of the aforementioned electric power supply, an electric current is supplied through the transistor Q1, the stator coil 7V, and the transistor Q4 and is supplied through the transistor Q1, the stator coil 7U, the stator coil 7W, and the transistor Q4.

On the other hand, in a case where the transistors Q3 and Q2 are turned on at the same time, the electric power is supplied between the V-phase terminal 42 and the W-phase terminal 43. In this case, the electric current is supplied through the transistor Q3, the stator coil 7V, and the transistor Q2 and is supplied through the transistor Q3, the stator coil 7W, the stator coil 7U, and the transistor Q2.

Directions where the electric current flows through the stator coils 7U, 7V, and 7W are different between the case where the transistors Q1 and Q4 are turned on and the case where the transistors Q3 and Q2 are turned on. As a result, the magnetic flux is generated at each of the stator coils 7U, 7V, and 7W based on the direction where the electric current flows, thereby generating attraction and repulsion between the aforementioned magnetic flux and the permanent magnet provided at the rotor. Plural pairs of the transistors, each pair being constituted by one of the transistors Q1, Q3, and Q5 at the high-level side and one of the transistors Q2, Q4, and Q6 at the low-level side, are sequentially turned on so as to obtain the rotational force of the rotor.

The transistors Q1 to Q6 are provided with diodes D1, D2, D3, D4, D5, and D6 (which will be hereinafter referred to as diodes D1 to D6 when collectively described) respectively in a state where each collector terminal of the transistors Q1 to Q6 is connected to each cathode terminal of the diodes D1 to D6 while each emitter terminal of the transistors Q1 to Q6 is connected to each anode terminal of the diodes D1 to D6. The diodes D1 to D6 are provided so that, when the power supply to each of the stator coils 7U, 7V and 7W is stopped, a peripheral component is protected from being adversely affected by a counter-electromotive force that is generated due to energy stored at each of the stator coils 7U, 7V, and 7W during the power supply to the stator coils 7U, 7V and 7W.

A control relative to the transistors Q1 to Q6 is performed by the PWM control portion 1. The PWM control portion 1 controls switching elements of the inverter 11 by a PWM signal having a predetermined frequency. The switching elements of the inverter 11 correspond to the aforementioned transistors Q1 to Q6 according to the present embodiment. Thus, the PWM control portion 1 operates the transistors Q1 to Q6 of the inverter 11 by a PWM control.

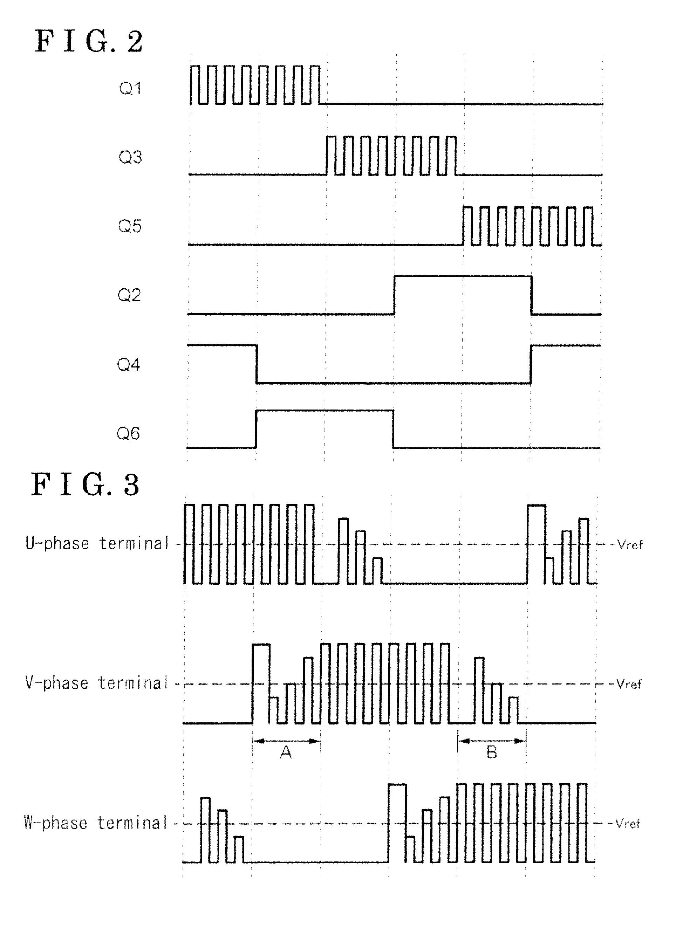

An example of the PWM signal output from the PWM control portion 1 is illustrated in Fig. 2. Fig. 2 illustrates the PWM signals for the transistors Q1, Q3, Q5, Q2, Q4, and Q6, respectively. Specifically, the PWM signals for the transistors Q1, Q3, and Q5 each include plural pulses. The conduction state (i.e., on/off) of each of the transistors Q1 to Q6 is controlled by the pulses.

The PWM control portion 1 includes a microcomputer operating at a low voltage such as 2.5V and 3.3V. Thus, a driving ability to cause the transistors Q1 to A6 to be turned on may be insufficient depending on the electric current flowing through the transistors Q1 to Q6 and electrical characteristics of the transistors Q1 to Q6. Therefore, a driver is arranged between the PWM control portion 1 and the inverter 11 so as to increase the driving ability of the PWM signal of the PWM control portion 1. The driver may be constituted by a driver IC or a push-pull circuit by a transistor, for example. In a case where the driving ability of the PWM signal output from the PWM control portion 1 is high, the driver may be omitted. The PWM control portion 1 controls the rotation of the three-phase motor 10 by means of a known vector control. Because the vector control is a known technique, an explanation thereof will be omitted.

The comparison portion 5 compares a magnitude correlation between a terminal voltage at each of the terminals of the three-phase motor 10 and a reference voltage Vref that is specified beforehand. Specifically, the terminals of the three-phase motor 10 are the U-phase terminal 41, the V-phase terminal 42, and the W-phase terminal 43. Voltage waveforms of the U-phase terminal 41, the V-phase terminal 42, and the W-phase terminal 43 are illustrated in Fig. 3.

The reference voltage Vref is generated by the reference voltage generation portion 4. According to the present embodiment, the reference voltage Vref corresponds to half of an output voltage of the power source 12. Specifically, the reference voltage generation portion 4 includes a pair of resistors R. R having the same resistance values and provided between the reference voltage generation portion 4 and the positive terminal of the power source 12, and between the reference voltage generation portion 4 and the negative terminal of the power source 12, respectively, The reference voltage Vref is generated and obtained by a voltage division relative to the output voltage of the power source 12 by the usage of the pair of resistors R, R. The reference voltage Vref is illustrated in Fig. 3 by a dashed line.

The comparison portion 5 includes three comparators 5U, 5V, and 5W as illustrated in Fig. 1. The reference voltage Vref is input to an inverting terminal of each of the comparators 5U, 5V, and 5W. Then, the voltage of each of the U-phase terminal 41, the V-phase terminal 42, and the W-phase terminal 43 is input to a non-inverting terminal of each of the comparators 5U, 5V, and 5W. The comparator 5U compares the magnitude correlation between the terminal voltage of the U-phase terminal 41 and the reference voltage Vref. The comparator 5V compares the magnitude correlation between the terminal voltage of the V-phase terminal 42 and the reference voltage Vref. The comparator 5W compares the magnitude correlation between the terminal voltage of the W-phase terminal 43 and the reference voltage Vref. Each of the comparators 5U, 5V, and 5W outputs a high signal in a case where each of the terminal voltages is greater than the reference voltage Vref, and outputs a low signal in a case where each of the terminal voltages is smaller than the reference voltage Vref. The output from each of the comparators 5U, 5V, and 5W is transmitted to the determination portion 2.

The edge detection portion 6 detects edges of the PWM signal. The PWM signal including the plural pulses is transmitted from the PWM control portion 1. The edge detection portion 6 detects the edges of the pulses included in the PWM signal, specifically, failing edges of the pulses. A method to detect such edges is known and thus an explanation will be omitted. The edge detection portion 6 detects the fatting edges of all the pulses so as to transmit the detection result to the determination portion 2.

The determination portion 2 determines the magnitude correlation at least two times between the reference voltage Vref and the terminal voltage of each of the terminals 41, 42, and 43 of the three-phase motor 10 in a state where the terminal voltage corresponds to one cycle of the PWM signal input to each of the transistors Q1 to Q6. Therefore, the terminal voltage corresponding to one cycle of the PWM signal is equal to an applied voltage to the three-phase motor 10 in response to the input of one cycle of the PWM signal to each of the transistors Q1 to Q6. The magnitude correlation between the reference voltage Vref and the terminal voltage of each of the terminals 41, 42, and 43 is specified based on the output of each of the comparators 5U, 5V, and 5W of the comparison portion 5. The determination portion 2 determines the magnitude correlation between the reference voltage Vref and the terminal voltage at least two times per cycle of the PWM signal. The determination result of the determination portion 2 is transmitted to the detection portion 3. According to the present embodiment, the determination portion 2 determines the magnitude correlation two times between the reference voltage Vref and the terminal voltage at the aforementioned one cycle of the PWM signal.

The determination portion 2 determines the magnitude correlation between the reference voltage Vref and the terminal voltage at a timing based on the edge detected by the edge detection portion 6. According to the present embodiment, the edge detected by the edge detection portion 6 is the falling edge of the pulse included in the PWM signal. The timing based on the edge is a timing at which the edge (the falling edge) is detected. The magnitude correlation between the reference voltage Vref and the terminal voltage is determined on a basis of a detection result of the comparison portion 5. Accordingly, in a case where the falling edge is detected, the determination portion 2 determines the magnitude correlation between the reference voltage Vref and the terminal voltage. The aforementioned determination is conducted two times per cycle of the PWM signal. The determination result is transmitted to the detection portion 3.

The detection portion 3 detects the position of the rotor of the three-phase motor 10 based on the determination result of the determination portion 2. The determination portion 2 determines the magnitude correlation between the reference voltage Vref and the terminal voltage corresponding to one cycle of the PWM signal two times as mentioned above. In a case where the determination result of the determination portion 2 in which the terminal voltage smaller than the reference voltage Vref exceeds the reference voltage Vref is obtained two times in one cycle of the PWM signal or in a case where the determination result of the determination portion 2 in which the terminal voltage greater than the reference voltage Vref falls below the reference voltage Vref is obtained two times in one cycle of the PWM signal, the detection portion 3 concludes or detects that the rotor reaches a specific position (i.e., the detection portion 3 detects the position of the rotor).

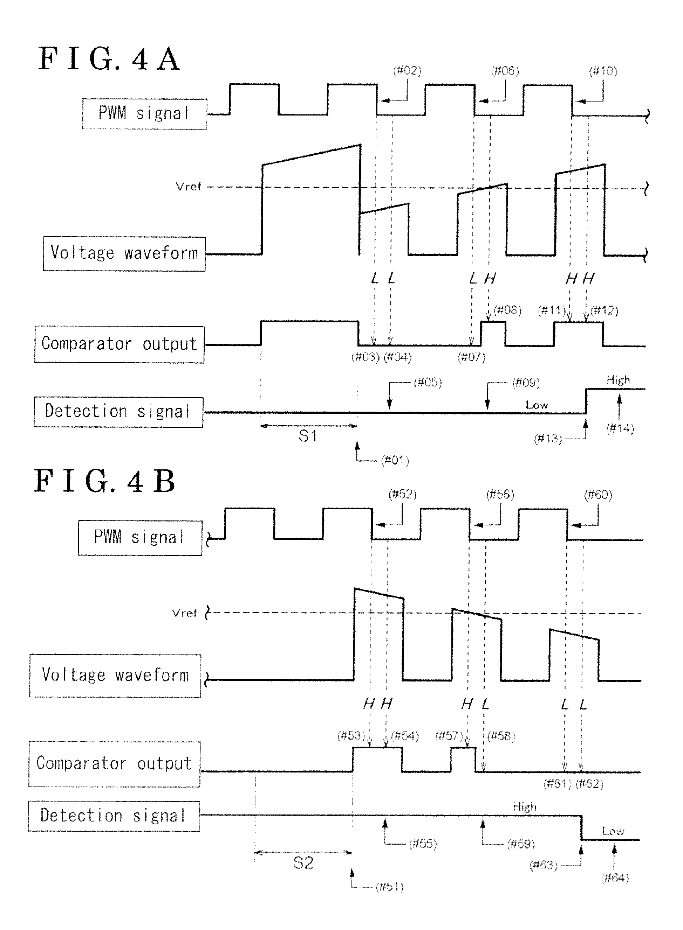

Figs. 4A and 4B axplain a time period A and a time period B (see Fig. 3) in the voltage waveform of the V-phase terminals 42. First, the time period A will be explained. Fig. 4A illustrates the PWM signal (the PWM signal contralling the transistor Q1), the voltage waveform of the V-phase terminal in a solid line and the reference voltage Vref in a dashed line, and an output signal of the comparator 5V for which the voltage waveform of the V-phrase terminal 42 and the reference voltage Vref are input signals. As illustrated in Fig. 4A, the comparator 5V outputs the high signal in a case where the voltage of the V-phase terminal 42 is greater than the reference voltage Vref. The comparator 5V outputs the low signal in a case where the voltage of the V-phase terminal 42 is smaller than the reference voltage Vref.

In a time period S1 in Fig. 4A, the voltage of the V-phase terminal 42 is greater than the reference voltage Vref and therefore the comparator 5V outputs the high signal. Such output of the comparator 5V is due to characteristics of the stator coils and is not suitable for the position detection of the rotor according to the present embodiment. Therefore, the time period S1 is defined to be a masking time (hereinafter referred to as a masking time S1) so that during the masking time S1 the determination portion 2 is prevented from determining the magnitude correlation between the reference voltage Vref and the terminal voltage of each of the terminals 41 to 43. As a result, during the masking time S1, the detection portion 3 continuously outputs a detection signal obtained before the masking time S1.

After the elapse of the masking time S1 (#01), the edge detection portion 6 detects the falling edge of the PWM signal (#02). Then, the determination portion 2 performs a first determination on the magnitude correlation between the terminal voltage and the reference voltage Vref (#03). In addition, after a predetermined time period from the first determination, the determination portion 2 performs a second determination on the magnitude correlation between the terminal voltage and the reference voltage Vref (#04). At this time, as illustrated in Fig. 4, the output of the comparator 5V is the low signal in both the first and second determinations of the determination portion 2. Thus, the detection portion 3 outputs a low signal as the detection signal (#05).

Next, in a case where the edge detection portion 6 detects the falling edge of the PWM signal (#06), the determination portion 2 performs the first determination on the magnitude correlation between the terminal voltage and the reference voltage Vref (#07). In addition, after the predetermined time period from the first determination, the determination portion 2 performs the second determination on the magnitude correlation between the terminal voltage and the reference voltage Vref (#08). At this time, as illustrated in Fig. 4, the output of the comparator 5V is the high signal in the second determination but is the low signal in the first determination. Thus, the detection signal of the detection portion 3 is maintained to be the previous state, i.e., the low signal (#09).

In a state where the edge detection portion 6 the falling edge of the PWM signal as time further advances (#10), the determination portion 2 performs the first determination on the magnitude correlation between the terminal voltage and the reference voltage Vref (#11). In addition, after the predetermined time period from the first determination, the determination portion 2 performs the second determination on the magnitude correlation between the terminal voltage and the reference voltage Vref (#12). At this time, as illustrated in Fig. 4C, the output of the comparator 5V is the high signal in both the first and second determinations of the determination portion 2. Thus, as illustrated in Fig. 4, the detection portion 3 outputs a high signal as the detection signal (#13). Such detection signal (the high signal) is continuously output until the comparator 5V outputs the low signal in the first and second determinations in one cycle of the PWM signal.

Next, the time period B (see Fig. 3) will be explained. Fig. 4B illustrates the PWM signal of the transistor Q5, the voltage waveforms of the V-phase terminal in a soled line and the reference voltage Vref in a dashed line, and the output signal of the comparator 5V for which the voltage waveform of the V-phase terminal 42 and the reference voltage Vref are the input signals. As illustrated in Fig. 4B, the comparator 5V outputs the high signal in a case where the voltage of the V-phase terminal 42 is grater than the reference voltage Vref. The comparator 5V outputs the low signal in a case where the voltage of the V-phase terminal 42 is smaller than the reference voltage Vref.

In a time period S2 in Fig. 4B, the voltage of the V-phase terminal 42 is smaller than the reference voltage Vref and therefore the comparator 5V outputs the low signal. Such output of the comparator 5V is due to the characteristics of the stator coils and is not suitable for the position detection of the rotor according to the present embodiment. Therefore, the time period S2 is defined to be the masking time (hereinafter referred to as a masking time S2) so that during the masking time S2 the determination portion 2 is prevented from determining the magnitude correlation between the terminal voltage of each of the terminals 41 to 43 and the reference voltage Vref. As a result, during the masking time S2, the detection portion 3 continuously outputs the detection signal obtained before the masking time S2.

After the elapse of the masking time S2 (#51), the edge detection portion 6 detects the falling edge of the PWM signal (#52). Then, the determination portion 2 performs the first determination on the magnitude correlation between the terminal voltage and the reference voltage Vref (#53). In addition, after the predetermined time period from the first determination, the determination portion 2 performs the second determination on the magnitude correlation between the terminal voltage and the reference voltage Vref (#54). At this time, as illustrated in Fig. 4B, the output of the comparator 5V is the high signal in both the first and second determinations of the determination portion 2. Thus, the detection portion 3 outputs the high signal as the detection signal (#55).

Next, in a case where the edge detection portion 6 detects the falling edge of the PWM signal (#56), the determination portion 2 performs the first determination on the magnitude correlation between the terminal voltage and the reference voltage Vref (#57). In addition, after the predetermined time period from the first determination, the determination portion performs the second determination on the magnitude correlation between the terminal voltage and the reference voltage Vref (#58). At this time, the output of the comparator 5V is the low signal in the second determination but is the high signal in the first determination. Thus, the detection signal of the detection portion 3 is maintained to be the previous state, i.e., the high signal (#59).

In a state where the edge detection portion 6 detects the falling edge of the PWM signal as time further advances (#60), the determination portion 2 performs the first determination on the magnitude correlation between the terminal voltage and the reference voltage Vref (#61). In addition, after the predetermined time period from the first determination, the determination portion 2 performs the second determination on the magnitude correlation between the terminal voltage and the reference voltage Vref (#62). At this time, the output of the comparator 5V is the low signal in both the first and second determinations of the determination portion 2. Thus, the detection portion 3 outputs the low signal as the detection signal (#63). Such detection signal (the low signal) is continuously output until the comparator 5V outputs the high signal in the first and second determinations in one cycle of the PWM signal (#64). The aforementioned detection result of the detection portion 3 is transmitted to the PWM control portion 1.

In a case where it is detected that the rotor reaches a specific position, the PWM control portion 1 controls the inverter 11 based on the detection result. That is, two of the terminals to which the electric power is supplied are changed and selected among the three terminals. Such procedures are continuously performed so as to appropriately control the rotation of the three-phase motor 10.

According to the rotor position detecting apparatus 100 of the present embodiment, even when the number of pulses of the PWM signal decreases because of the of the revolutions of the three-phase motor 10, the position detection of the rotor is completed within one cycle of the PWM signal. Thus, regardless of the revolutions of the three-phase motor 10, the rotor position is appropriately detected. In addition, because the rotor position is detected on a of the result after the plural determinations, the wrong detection of the rotor because of a noise, for example is restrained.

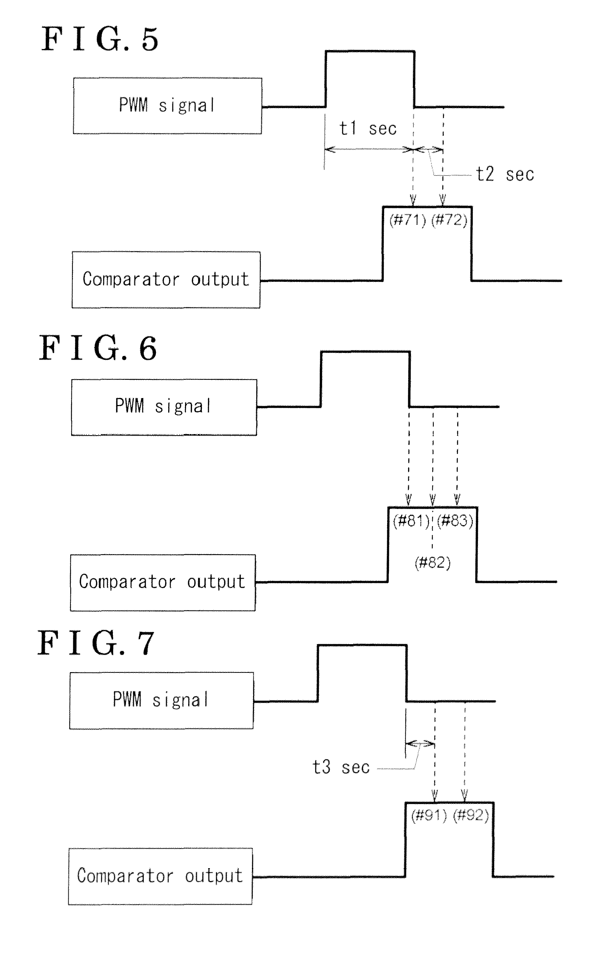

According to the aforementioned embodiment, the edge detection portion 6 detects the falling edges of the pulses included in the PWM signal, and the determination portion 2 determines the magnitude correlation between the terminal voltage and the reference voltage Vref. Alternatively, for example, the determination portion 2 may performs the first determination on the magnitude correlation between the terminal voltage and the reference voltage Vref after a predetermined time elapses from the detection of the rising edge of the PWM signal. Such example is illustrated in Fig. 5. As illustrated in Fig. 5, the determination portion 2 performs the first determination after an elapse of t1 sec (#71) serving as the predetermined time from the detection of the rising edge and performs the second determination after an elapse of t2 sec (#72) from the first determination. According to such configuration, the rotor position is appropriately detected.

According to the aforementioned embodiment, the determination portion 2 determines the magnitude correlation between the terminal voltage and the reference voltage Vref two times per cycle of the PWM signal, Alternatively, as illustrated in Fig. 6, the determination portion 2 may determine the magnitude correlation three times or more (#81, #82, and #83).

Even when it is specified beforehand that the determination timing of the determination portion 2 is the falling edge of the PWM signal, the determination portion 2 may change the determination timing (the timing at which the determination portion 2 determines the magnitude correlation) depending on the revolutions of the three-phase motor 10 as illustrated in Fig. 7. For example, in a case where the revolutions of the three-phase motor 10 increase, the first determination may be performed after an elapse of t3 sec from the falling edge (#91), and the second determination may be performed after an elapse of a predetermined time (#92). Further, the determination portion 2 may change the number of times the determination portion 2 determines the magnitude correlation depending on the revolutions of the three-phase motor 10.

The determination portion 2 may change the determination timing depending on a duty ratio of the PWM signal. Further, the determination portion 2 may change the number of times the determination portion 2 determines the magnitude correlation depending on the duty ratio of the PWM signal.

According to the aforementioned embodiment, the stator coils 7U, 7V, and 7W of the three-phase motor 10 are connected in the delta-connection. Alternatively, the stator coils 7U, 7V, and 7W of the three-phase motor 10 may be connected in a Y-connection.

In addition, according to the aforementioned embodiment, the reference voltage Vref corresponds to half of the output voltage of the power source 12. Alternatively, the reference voltage Vref different from half of the output voltage of the power source 12 may be applied in a state where the reference voltage generation portion 4 includes the two resistors R, R having the different resistance values.

Further, according to the aforementioned embodiment, the comparison portion 5 includes the three comparators 5U, 5V, and 5W. Alternatively, for example, the voltage waveforms of the U-phase terminal 41, the V-phase terminal 42, and the W-phase terminal 43 may be combined into one voltage waveform so that the comparison portion 5 includes only one comparator.

The present embodiment is applicable to the rotor position detecting apparatus detecting the position of the rotor of the motor.

## Claims

1. A rotor position detecting apparatus (100) comprising:
a PWM control portion (1) controlling a switching element (Q1, Q2, Q3, Q4, Q5, Q6) included in an inverter (11) by a PWM signal having a predetermined frequency;
a determination portion (2) determining a magnitude correlation at least two times between a reference voltage (Vref) specified beforehand and a terminal voltage of each terminal (41, 42, 43) included in a three-phase motor (10) in a state where the terminal voltage corresponds to one cycle of the PWM signal; and
a detection portion (3) detecting a position of a rotor of the three-phase motor (10) based on a determination result of the determination portion (2).

2. The rotor position detecting apparatus (100) according to claim 1, wherein the detection portion (3) detects that the rotor reaches a specific position in a case where the determination result of the determination portion (2) in which the terminal voltage smaller than the reference voltage (Vref) exceeds the reference voltage (Vref) is obtained at least two times in the one cycle of the PWM signal or in a case where the determination result of the determination portion (2) in which the terminal voltage greater than the reference voltage (Vref) falls below the reference voltage (Vref) is obtained at least two times in the one cycle of the PWM signal.

3. The rotor position detecting apparatus (100) according to either claim 1 or 2, further comprising an edge detection portion (6) detecting an edge of the PWM signal, wherein the determination portion (2) determines the magnitude correlation at a timing based on the edge detected by the edge detection portion (6).

4. The rotor position detecting apparatus (100) according to any one of claims 1 through 3, wherein the determination portion (2) performs a first determination after a predetermined time elapses from a detection of a rising edge of the PWM signal.

5. The rotor position detecting apparatus (100) according to any one of claims 1 through 4, wherein the determination portion. (2) changes a timing at which the determination portion (2) determines the magnitude correlation depending on revolutions of the three-phase motor (10).

6. The rotor position detecting apparatus (100) according to any one of claims 1 through 5, wherein the determination portion (2) changes the number of times the determination portion (2) determines the magnitude correlation depending on revolutions of the three-phase motor (10).

7. The rotor position detecting apparatus (100) according to any one of claims through 6, wherein the determination portion (2) changes a timing at which the determination portion (2) determines the magnitude correlation depending on a duty ratio of the PWM signal.

8. The rotor position detecting apparatus (100) according to any one of claims 1 through 7, wherein the determination portion (2) changes the number of times the determination portion (2) determines the magnitude correlation depending on a duty ratio of the PWM signal.
